# EUROPÄISCHE PATENTSCHRIFT

(11) **EP 0 757 532 B1**
(45) Veröffentlichungstag und Bekanntmachung des Hinweises auf die Patenterteilung: **10.06.1998**
(21) Anmeldenummer: 95919992.8
(22) Anmeldetag: 28.04.1995
(51) Int. Cl.: A47J 43/046, G01G 19/56, A47J 36/16

(54) **KÜCHENMASCHINE MIT EINEM RÜHRGEFÄSS UND EINEM ANTRIEB FÜR EIN RÜHRWERK IN DEM RÜHRGEFÄSS**
FOOD PROCESSOR WITH A MIXING VESSEL AND A DRIVE MECHANISM FOR AN AGITATOR IN THE MIXING VESSEL
ROBOT MENAGER COMPORTANT UN BAC A AGITATION ET UN MECANISME D'ENTRAINEMENT DE L'AGITATEUR DU BAC

(30) Priorität: 28.04.1994 DE 4414824
(43) Veröffentlichungstag der Anmeldung: 12.02.1997
(73) Patentinhaber: Vorwerk & Co. Interholding GmbH, 42275 Wuppertal (DE)
(72) Erfinder: DÖRNER, Stefan, D-42697 Solingen (DE)
(74) Vertreter: Müller, Enno, Dipl.-Ing.
(86) Internationale Anmeldenummer: EP9501635
(87) Internationale Veröffentlichungsnummer: WO9529617

(56) Entgegenhaltungen:
- EP-A- 0 396 059
- EP-A- 0 499 062
- EP-A- 0 561 259
- DE-A- 3 148 585
- DE-U- 1 894 430
- FR-A- 2 651 982

## Beschreibung

Die Erfindung betrifft eine Küchenmaschine mit einem Rührgefäß und einem Antrieb für ein Rührwerk in dem Rührgefäß, wobei das Rührgefäß in seinem unteren Bereich mittels einer Heizung aufheizbar ist (siehe die EP-A-0 499 062).

Eine weitere Küchenmaschine ist aus der EP-A-0 561 259 bekannt. Hier handelt es sich um eine Küchenmaschine zum Verarbeiten von Nahrungsmitteln, welche eine Wägeeinrichtung mit einem kraftaufnehmenden Element aufweist, durch welche Wägeeinrichtung das Gewicht von in einem Rührgefäß befindlichen Nahrungsmittel ermittelt und angezeigt werden kann. Beim Wiegevorgang wird das Rührgefäß vom kraftaufnehmenden Element getragen, welches seinerseits mit einem Gerätesockel verbunden ist. Zwischen dem kraftaufnehmenden Element und dem Rührgefäß sind gegen die Kraft einer vorgespannten Feder vertikal verschiebbare Auflageelemente ausgebildet. Das Rührgefäß liegt beim Wiegen lose auf dem Auflageelementen auf und ist zum Betrieb der Küchenmaschine mit dem Gerätesockel verriegelbar. Das kraftaufnehmende Element besteht aus einem am Gerätesockel befestigten Wiegebalken mit darauf angebrachten Dehnungsmeßstreifen, deren Signal von einer elektronischen Schaltung ausgewertet und angezeigt wird.

Aufgabe der vorliegenden Erfindung ist es, eine gattungsgemäße Küchenmaschine in vorteilhafter Weise weiterzubilden.

Gelöst ist die Aufgabe durch die im Hauptanspruch angegebene Erfindung.

Die Unteransprüche stellen vorteilhafte Weiterbildungen dar.

Die Aufgabe ist erfindungsgemäß dadurch gelöst, daß eine Wägeeinrichtung vorgesehen ist und daß die Wägeeinrichtung das Gewicht einer Rührtopfaufnahme, einschließlich der Heizung, aufnimmt. Die Küchenmaschine weist eine Rührtopfaufnahme auf, welche bei einem Betrieb der Küchenmaschine das Rührgefäß kraftschlüssig hält. Diese Rührtopfaufnahme wird von einer Heizung, insbesondere von einem Widerstandheizdraht oder dergleichen, umfaßt, zur Aufheizung des unteren Bereiches des Rührgefäßes. Die Wägeeinrichtung nimmt erfindungsgemäß das Gewicht der Rührtopfaufnahme, einschließlich der diese umgreifende Heizung, und des Rührgefäßes auf. Zur Anzeige des Gewichts kann eine in dem Gerätegehäuse angeordnete Digitalanzeige vorgesehen sein. Diese zeigt nach Einschalten der Küchenmaschine zunächst einen Tara-Punkt an. Eine elektronische Schalteinrichtung ist entsprechend so ausgelegt, daß eine Gewichtsanzeige erst nach einem entsprechenden Tastendruck erfolgt, wonach zunächst Null Gramm angezeigt werden. Es kann nunmehr zugewogen werden, wobei erfindungsgemäß vorgeschlagen wird, daß in einem Wiegeschritt bis zu 2,5 kg und insgesamt bis zu 7,5 kg gewogen werden können. Hierzu kann vorgesehen sein, daß die Gewichtsanzeige mit einer Reset-Taste versehen ist, um nach Einfüllen von Nahrungsmitteln oder dergleichen in das Rührgefäß die Gewichtsanzeige wiederum auf Null zu setzen. In einer bevorzugten Ausgestaltung des Erfindungsgegenstandes ist vorgesehen, daß die Wägeeinrichtung die zu wägenden Teile über eine Dreipunkt-Auflage abstützt. Die Wägeeinrichtung nimmt demnach das Gewicht der Rührtopfaufnahme, einschließlich der diese umgreifende Heizung, und das des Rührgefäßes über drei Auflagepunkte auf. So wird vorgeschlagen, daß die Auflagepunkte jeweils Endbereichen der Wägeeinrichtung zugeordnet sind. Bspw. kann die Wägeeinrichtung derart gestaltet sein, daß diese drei Schenkel aufweist, in deren Endbereichen die jeweiligen Auflagepunkte angeordnet sind. Um etwaige Schwingungen, welche durch den Rührwerkantrieb hervorgerufen werden können, weitestgehend abzufangen, ist desweiteren vorgesehen, daß die Auflagepunkte jeweils mit einem Dämpfungselement ausgestattet sind. Diese Dämpfungselemente können bspw. Gummipuffer sein, über welche die aufzunehmenden Baugruppen an das Wägegehäuse befestigt sind. Vorteilhafterweise ist vorgesehen, daß die Wägeeinrichtung das Gewicht des Antriebs aufnimmt. Der Antrieb für das Rührwerk in dem Rührgefäß ist in einer bevorzugten Ausgestaltung ein Elektromotor, welcher über einen Zahnriemen oder dergleichen das Rührwerk antreibt. Zusätzlich zu den Gewichten des Rührgefäßes und der Rührtopfaufnahme kann also vorgesehen sein, daß das Gewicht des Antriebes ebenfalls von der Wägeeinrichtung aufgenommen wird. Auch dieses Eigengewicht des Antriebes wird bei der Gewichtsanzeige berücksichtigt, so daß nach Einschalten der Küchenmaschine zunächst der Tara-Punkt angezeigt wird. Weiterhin wird vorgeschlagen, daß ein Wiegebalken vorgesehen ist und daß der Wiegebalken entlang einer axialen Verlängerung zwischen dem Rührwerk und dem Antrieb ausgerichtet ist. Ein derartiger Wiegebalken kann in bekannter Weise ausgebildet und mit Dehnungsmeßstreifen versehen sein. Die Signale der Dehnungsmeßstreifen werden von einer elektronischen Schaltung ausgewertet und zur Anzeige gebracht. Bevorzugt wird eine Ausgestaltung, bei der der Wiegebalken mit einem kapazitiven Meßaufnehmer versehen ist, wobei sich der Abstand zweier Kondensator-Platten bei Gewichtsveränderung ebenso ändert. Bedingt durch die Anordnung des Wiegebalkens entlang einer axialen Verlängerung zwischen dem Rührwerk und dem Antrieb werden Verkippungskräfte im Bereich des Wiegebalkens sehr gering gehalten. Hierbei erweist es sich als besonders vorteilhaft, daß der Rührtopf einen ovalartigen Grundriß aufweist und daß der Wiegebalken entlang der größeren Achse des Grundrisses ausgerichtet ist. Der ovalartige Grundriß des Rührgefäßes ist hierbei beispielsweise so bemessen, daß ein Verhältnis von kleinerer Achse zur größeren Achse etwa 1:1,2 bis 1:1,5 beträgt. Auch hierbei werden, bedingt durch die Ausrichtung des Wiegebalkens entlang der größeren Achse des Grundrisses, die Verkippungskräfte relativ gering gehalten. Die größere Achse des Grundrisses des Rührgefäßes fällt zudem mit der axialen Verlängerung zwischen dem Rührwerk und dem Antrieb zusammen. Vorteilhafter Weise ist vorgesehen, daß der Wiegebalken in einem, eine horizontale Teilung aufweisenden Wägegehäuse aufgenommen ist. Durch Verschmutzung, wie beispielsweise Fettablagerungen, an dem Wiegebalken können die Gewichtsangaben verfälscht sein. Um diesem entgegenzuwirken, wird der Wiegebalken in einem Wägegehäuse aufgenommen, womit der Wiegebalken vor Verschmutzungen geschützt ist. Das Wägegehäuse weist eine horizontale Teilung auf und ist bevorzugt zweigeteilt ausgebildet. Hierzu wird vorgeschlagen, daß das Wägegehäuse ein unteres und ein oberes Gehäuseteil besitzt, welche beiden Gehäuseteile lediglich über den Wiegebalken miteinander verbunden sind. Um das untere und das obere Gehäuseteil und auch den Wiegebalken vor unzulässiger Verformung zu schützen, wird vorgeschlagen, daß ein Oberteil des Wägegehäuses an einem Unterteil über eine in beiden Richtungen wirksame Anschlagsicherung gefangen ist. Diese Anschlagsicherung kann in Form von justierbaren Endanschlägen ausgebildet sind, welche nahe der Auflagepunkte positioniert sind. Diese Anschlagsicherung wirkt sowohl in Zug- als auch in Druckrichtung. In einer vorteilhaften Weiterbildung ist vorgesehen, daß das Wägegehäuse einen T-förmigen Grundriß aufweist. Es ist hierbei von Vorteil, daß die beiden T-Balken in einem spitzen Winkel zueinander verlaufen. Vorgeschlagen wird hierbei eine Anordnung, bei der entlang der größeren Achse des Grundrisses des Rührgefäßes bzw. entlang der axialen Verlängerung zwischen dem Rührwerk und dem Antrieb ein langer, den Wiegebalken aufnehmender Schenkel vorgesehen ist, von welchem etwa von seiner Mitte ausgehend sich ein kürzerer Schenkel bspw. senkrecht zu dem längeren Schenkel erstreckt. Auch hier ist eine horizontale Teilung vorgesehen, welche durch ein Unter- und ein Oberteil des Gehäuses gebildet ist, wobei jedes Gehäuseteil entsprechend einen T-förmigen Grundriß aufweist. Das Oberteil und das Unterteil des Gehäuses sind jeweils gleich ausgeformt. Weiterhin wird vorgeschlagen, die Grundrißfläche eines Oberteils so auszubilden, daß ein Flächen-Schwerpunkt im Bereich des Wiegebalkens liegt, vorzugsweise in einem Schnittpunkt einer Wiegebalken-Längsachse mit einer senkrecht zum längeren Schenkel ausgerichteten, in Richtung auf den kürzeren Schenkel weisenden Achse. Weiterhin wird vorgeschlagen, daß die beiden T-Balken des Wägegehäuses in einem spitzen Winkel zueinander verlaufen. Hierbei wird eine Ausgestaltung bevorzugt, bei welcher der kurze Schenkel des Gehäuses zu dem langen Schenkel einen Winkel von etwa 70° - 75°, bevorzugt 73°, einschließt. Es ist jedoch auch eine Ausgestaltung denkbar, bei welcher ein Winkel von 90° eingeschlossen wird. Der kurze Schenkel steht demnach senkrecht zu dem längeren Schenkel. In einer weiteren Ausgestaltung ist vorgesehen, daß ein Schenkel des T-förmigen Wägegehäuses keilförmig ausgebildet ist. Dieser keilförmige Schenkel ist bevorzugt der kürzere Schenkel des Wägegehäuses. Hierzu ist weiterhin vorgesehen, daß die Keilform des einen Schenkels durch die Projektion zweier für sich stielförmig abgewinkelter Schenkel des Unterteiles und des Oberteiles gebildet ist. Vorzugsweise ist der stielförmig abgewinkelte Schenkel der kürzere Schenkel des Gehäuses, welcher zu dem langen Schenkel einen spitzen Winkel von ca. 73° einschließt. Werden die beiden Gehäuseteile, wie bereits erwähnt, gleich ausgebildet, so wird durch die Übereinanderordnung der beiden Gehäuseteile und der damit in gespiegelte Richtungen abgewinkelten kurzen Schenkel die erwähnte Keilform gebildet. Bedingt durch diese Ausgestaltung wird eine erhöhte Stabilität des kurzen Schenkels erzielt. Wie erwähnt, wird eine Ausgestaltung des Wägegehäuses bevorzugt, bei welcher das Oberteil und das Unterteil zumindest hinsichtlich ihrer Außenkonturen formgleich ausgebildet sind. Weiterhin erweist es sich als besonders vorteilhaft, daß die Rührtopfaufnahme und der Antrieb insgesamt auf einem Chassis angeordnet sind und daß das Chassis auf das Wägegehäuse einwirkt. Das Chassis weist bevorzugt eine Längserstreckung entlang der axialen Verlängerung zwischen dem Rührwerk und dem Antrieb bzw. entlang der größeren Achse des Grundrisses des Rührgefäßes auf. Auf diesem Chassis werden in einem Endbereich der Antrieb und in dem anderen Endbereich die Rührtopfaufnahme, einschließlich der Heizung, angeordnet. Diese gesamte Baueinheit wirkt auf das Wägegehäuse, wobei auch hier das Eigengewicht des Chassis bei der Gewichtsermittlung berücksichtigt wird. Schließlich wird vorgeschlagen, daß das Chassis über drei, in Endbereichen des T-Grundrisses des Wägegehäuses angeordnete Auflagepunkte auf das Wägegehäuse einwirkt. Die Auflagepunkte sind demnach in den jeweiligen Endbereichen des längeren, entlang der axialen Verlängerung zwischen dem Rührwerk und dem Antrieb ausgerichteten Schenkels und im Endbereich bspw. des senkrecht zu dem längeren Schenkel angeordneten kürzeren Schenkels vorgesehen. Auch hier wird ein Einsatz von Dämpfungselementen bevorzugt, welche zwischen dem Chassis und dem Wägegehäuse im Bereich der Auflagepunkte positioniert werden. Diese Dämpfungselemente können bspw. als Gummipuffer ausgebildet sein. Diese gedämpfte Dreipunkt-Lagerung bewirkt eine optimale Gewichtsermittlung und ist auch für das gesamte Schwingverhalten des Chassis auf dem Wägegehäuse sehr von Vorteil. Aufgrund der großen Abstände zwischen den drei Punkten der Lagerung wird eine geringe Neigung des Chassis auf dem Wägegehäuse erreicht. Die Abstände der Auflagepunkte untereinander und somit auch die Längen von dem längeren Schenkel und dem kürzeren Schenkel sind in vorteilhafter Weise so bemessen, daß die Auflagepunkte die Eckpunkte eines nahezu rechtwinkligen Dreieckes bilden, wobei gedachte Verbindungslinien zwischen dem Auflagepunkt des kürzeren Schenkels zu den Auflagepunkten des längeren Schenkels einen Winkel einschließen, welcher ca. 90 bis 94°, bevorzugt ca. 92° beträgt.

Die Erfindung ist nachstehend anhand zweier zeichnerisch veranschaulichter Ausführungsbeispiele näher erläutert. Es zeigt:
- Fig. 1: eine erfindungsgemäße Küchenmaschine mit einem Rührgefäß in Seitenansicht,
- Fig. 2: die Küchenmaschine in Vorderansicht,
- Fig. 3: die Küchenmaschine in Draufsicht,
- Fig. 4: eine Wägeeinrichtung der Küchenmaschine in Draufsicht als Einzeldarstellung, eine erste Ausführungsform betreffend,
- Fig. 5: eine Seitenansicht der Wägeeinrichtung gemäß Fig. 4,
- Fig. 6: die Vorderansicht der Wägeeinrichtung,
- Fig. 7: die Wägeeinrichtung gemäß Fig. 4 ebenfalls in Draufsicht, jedoch nach Abnahme eines Gehäuseoberteiles,
- Fig. 8: den Schnitt gemäß der Linie VIII-VIII in Fig. 4,
- Fig. 9: die Draufsicht auf ein Chassis mit strichpunktiert dargestellter Anordnung der Wägeeinrichtung,
- Fig. 10: das Chassis gemäß Fig. 9 in Seitenansicht mit unter dem Chassis angeordnetem, strichpunktiert dargestelltem Wägegehäuse,
- Fig. 11: die Vorderansicht von Chassis und strichpunktiert dargestelltem Wägegehäuse gemäß Fig. 9,
- Fig. 12: den Schnitt gemäß der Linie XII-XII in Fig. 9,
- Fig. 13: den Schnitt gemäß der Linie XIII-XIII in Fig. 9,
- Fig. 14: eine der Fig. 4 entsprechende Darstellung, jedoch eine zweite Ausführungsform der Wägeeinrichtung betreffend,
- Fig. 15: eine der Fig. 7 entsprechende Darstellung, ebenfalls die zweite Ausführungsform betreffend,
- Fig. 16: den Schnitt gemäß der Linie XVI-XVI in Fig. 15,
- Fig. 17: eine Ausschnittsvergrößerung aus Fig. 16, eine Anschlagsicherung zwischen den beiden Gehäuseteilen darstellend und
- Fig. 18: eine weitere Ausschnittsvergrößerung aus Fig. 16, einen Auflagepunkt eines strichpunktiert dargestellten Chassis auf dem Wägegehäuse zeigend.

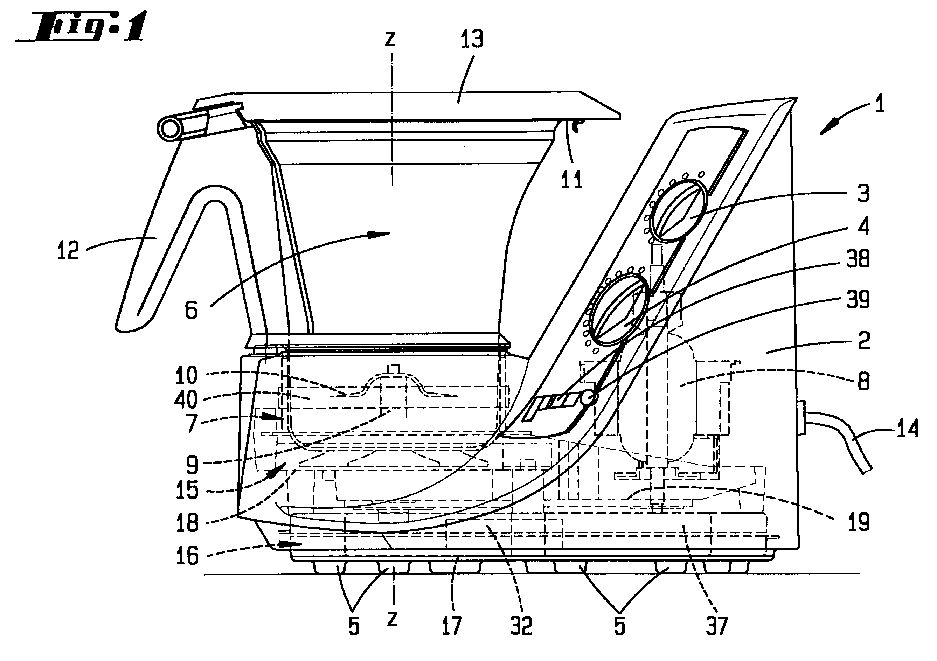

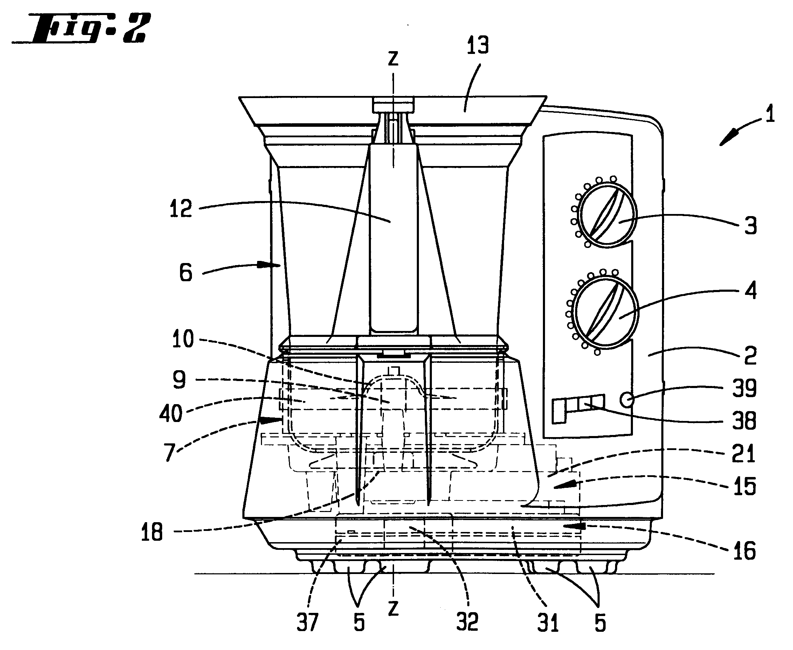

Die in den Fig. 1 bis 3 dargestellte Küchenmaschine 1 weist ein Gehäuse 2 auf, in welchem zwei Drehschalter 3, 4 angeordnet sind. Das Gehäuse 2 besitzt weiterhin unterseitig Abstellfüße 5 und rückseitig einen Elektrokabelanschluß 14.

Zur Lagerung eines Rührgefäßes 6 in der Küchenmaschine 1 ist diese mit einer Aufnahme 7 versehen. Ein in dem Ge- häuse 2 angeordneter Antrieb 8, beispielsweise in Form eines Elektromotors, treibt über einen nicht dargestellten Zahnriemen oder dergleichen und über eine vertikal, koaxial zu einer Vertikalachse z der Küchenmaschine 1 ausgerichtete Antriebswelle 9 ein innerhalb des Rührgefäßes 6 im Bodenbereich angeordnetes Rührwerk 10 an, welches über eine Kupplungsanordnung mit der Antriebswelle 9 in kraftflüssiger Verbindung steht. Die Drehzahl des Rührwerkes 10 wird über den Drehschalter 4 eingestellt.

Das Rührgefäß 6 ist in seinem oberen, offenen Bereich oval ausgestaltet, wobei in Verlängerung der größeren Achse x des Grundrisses eine über den Rand des Rührgefäßes 6 hinausragende Ausgießnase 11 vorgesehen ist. Letztere weist bei in das Gehäuse 2 eingesetztem Rührgefäß 6 in Richtung auf den mit den Drehschalter 3, 4 versehenen Gehäuseabschnitt. An dem der Ausgießnase 11 gegenüberliegenden Ende der größeren Achse x ist das Rührgefäß 6 mit einem Kannengriff 12 versehen. Letzterer erstreckt sich über die gesamte Höhe des Rührgefäßes 6.

Der in dem Rührgefäß 6 gebildete Raum ist von einem Gefäßdeckel 13 abgedeckt. Letzterer sitzt weitestgehend formschlüssig und radial dichtend auf dem oberen Rand des Rührgefäßes 6 auf.

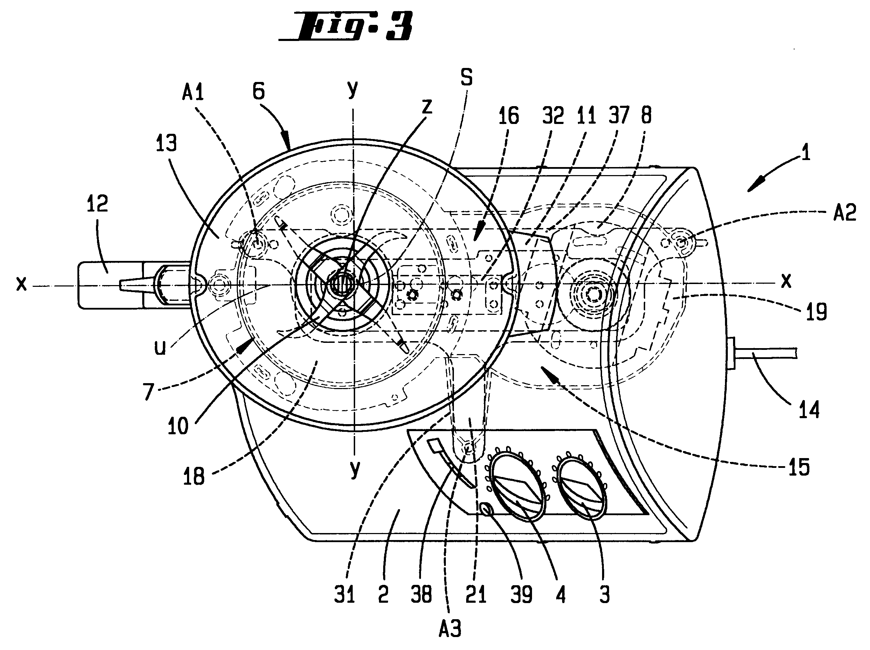

Wie aus Figur 3 zu erkennen, weist der ovale Grundriß des Rührgefäßes 6, insbesondere die Projektion des oberen Bereiches des Rührgefäßes 6, ein Verhältnis von größerer Achse x zur kleinere Achse y von etwa 1,2:1 auf. Der Schnittpunkt S der beiden Achsen x und y im oberen Bereiches des Rührgefäßes 6 ist zur Vertikalachse z entlang der Achse x in Richtung auf die Ausgießnase 11 verschoben und zwar im gezeigten Ausführungsbeispiel etwa um 3 bis 4 mm. Bedingt durch diese Ausgestaltung erfolgt mit zunehmender Befüllung des Rührgefäßes 6 eine Schwerpunktverlagerung entlang der Achse x in Richtung auf die Ausgießnase 11.

Im Bereich der Aufnahme 7 ist eine diese umschließende Heizung 40 in Form eines Widerstandsheizdrahtes angeordnet, mittels welcher der untere Bereich des Rührgefäßes 6 aufgeheizt werden kann.

In dem Gehäuse 2 ist weiterhin ein Chassis 15 angeordnet, welches sich auf einer Wägeeinrichtung 16 abstützt. Die Wägeeinrichtung 16 ist hierbei auf einem Gehäuseboden 17 angeordnet.

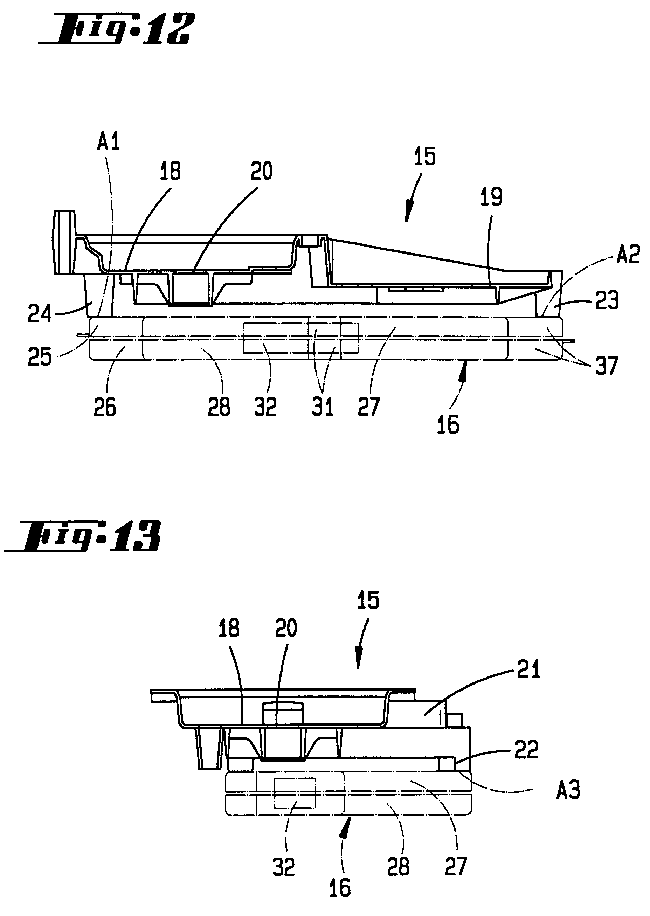

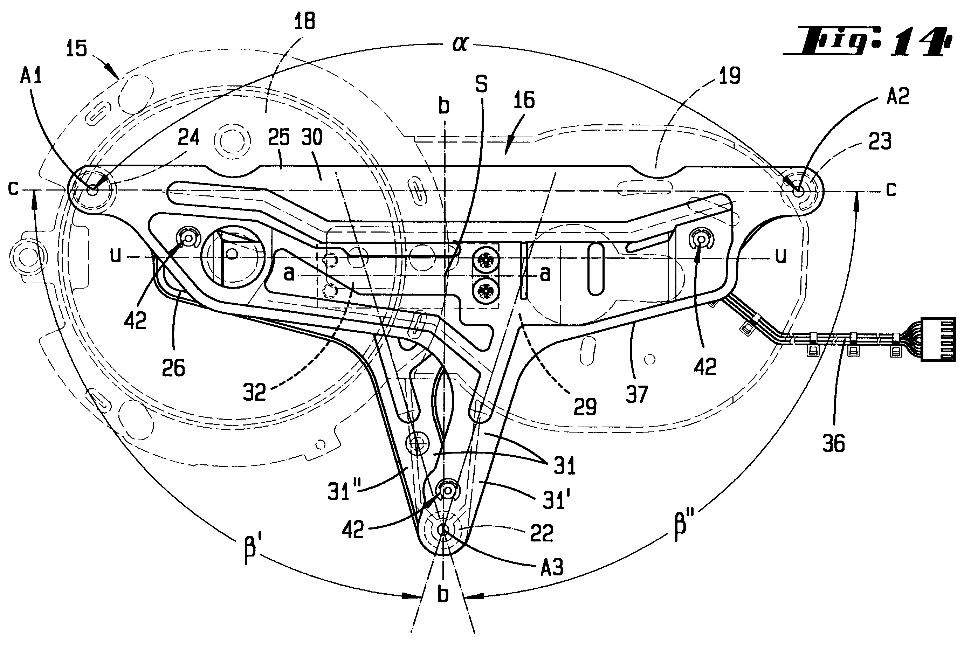

Das Chassis 15 ist im einzelnen in den Figuren 9 bis 13 dargestellt. Aus der Draufsicht in Figur 9 ist zu erkennen, daß das Chassis 15 einen langgestreckten Grundriß aufweist, wobei in einem Endbereich ein tellerförmiger Aufnahmeboden 18 für das Rührgefäß 6 vorgesehen ist. Letzterer ist kreisrund ausgebildet und weist einen topfartigen Querschnitt auf (vergl. Fig. 12 und 13). In dem dem Aufnahmeboden 18 gegenüberliegenden Endbereich ist ein Montageboden 19 vorgesehen, auf welchem der Antrieb 8 anzuordnen ist.

Die Längsachse u des Chassisgrundrisses verläuft durch den Mittelpunkt des Aufnahmebodens 18 und durch den Montageboden 19. Im Zentrum des Aufnahmebodens 18 ist eine kreisrunde Durchbrechung 20 zum Durchtritt der Antriebswelle 9 vorgesehen.

Senkrecht zur Längsachse u ist etwa mittig, bezogen auf die Längserstreckung des Chassis 15, ein Ausleger 21 dem Chassis 15 angeformt. Dieser Ausleger 21 weist an seinem freikragenden Ende einen nach unten weisenden, kegelstumpfförmig ausgebildeten Auflagefuß 22 auf.

Auf der dem Ausleger 21 abgewandten Seite der Längsachse u sind mit Abstand zu dieser zwei weitere, jeweils an den Enden des Chassis 15 angeordnete, ebenfalls nach unten weisende, kegelstumpfförmige Auflagefüße 23 und 24 vorgesehen.

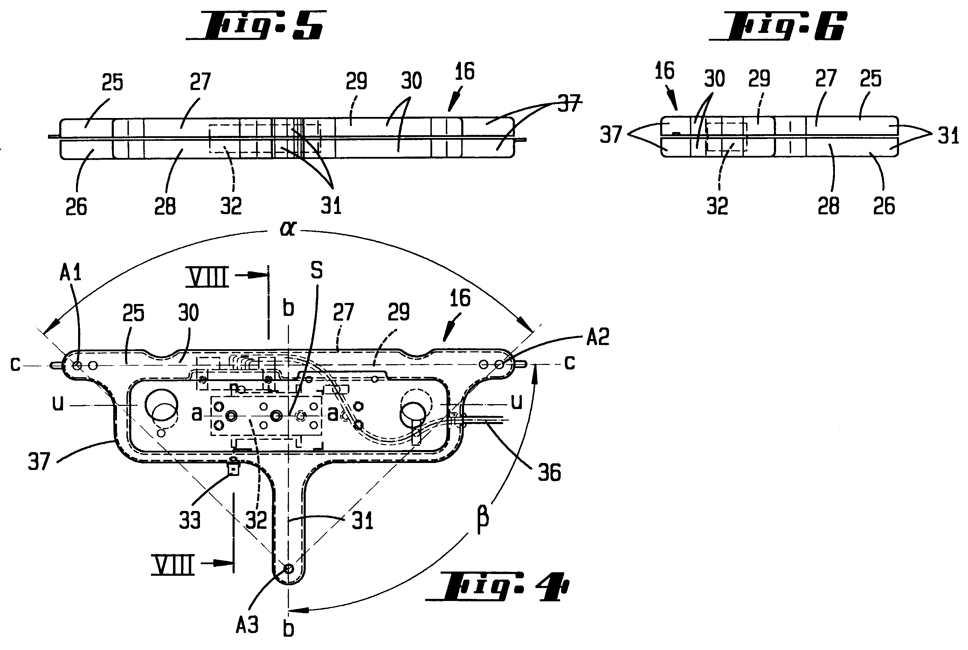

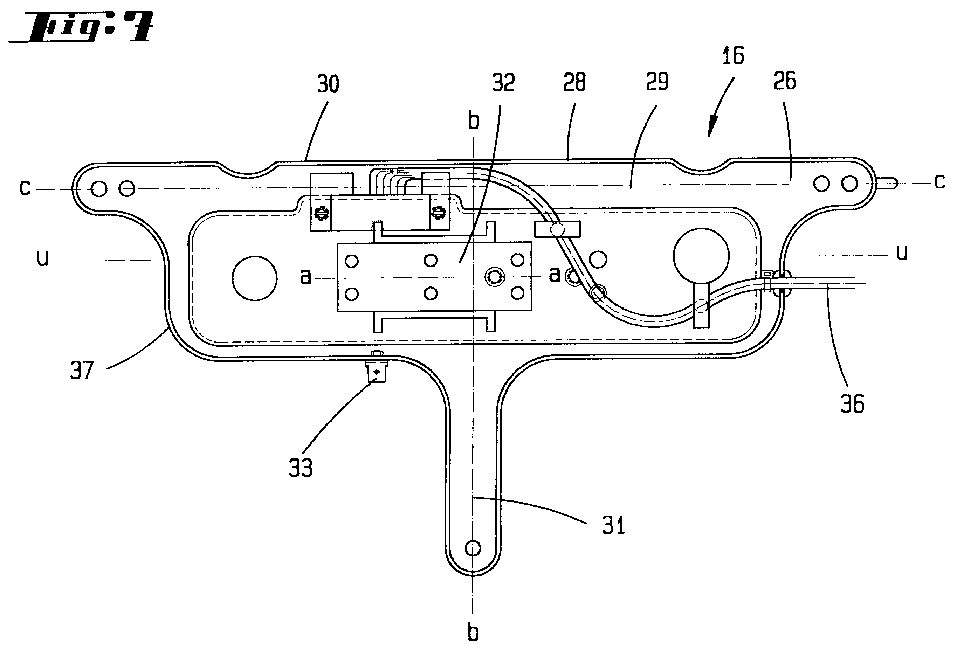

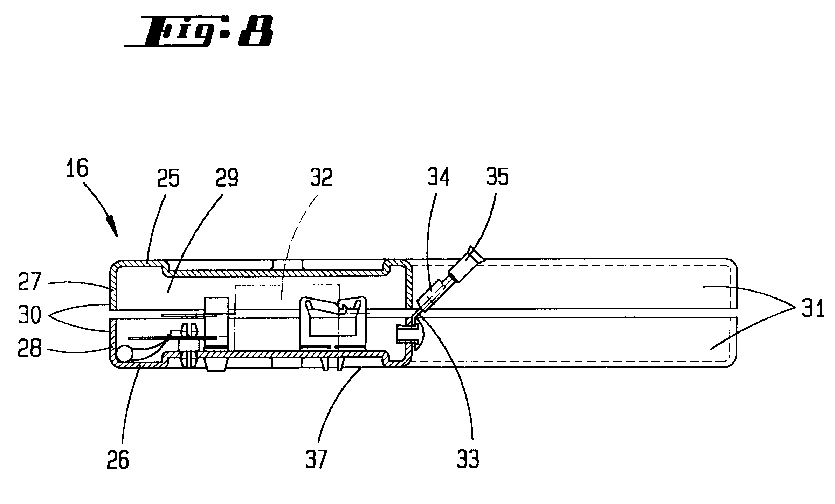

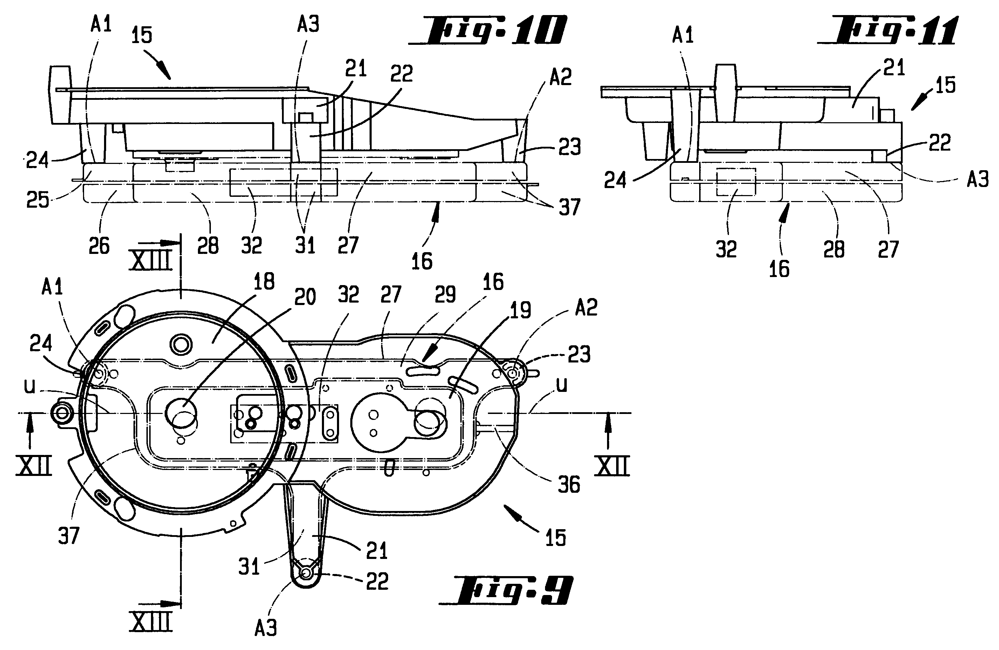

Die in den Fig. 4 bis 8 dargestellte erste Ausführungsform einer Wägeeinrichtung 16 weist einen T-förmigen Grundriß auf und setzt sich im wesentlichen aus einem Oberteil 25 und einem Unterteil 26, deren Grundrisse entsprechend ausgebildet sind. Das Oberteil 25 besitzt randaußenseitig eine umlaufende, nach unten weisende Oberteilwandung 27. Dementsprechend besitzt das Unterteil 26 eine nach oben weisende Unterteilwandung 28. Der zwischen Oberteil 25 und Unterteil 26 gebildete Wägeraum ist mit der Ziffer 29 bezeichnet.

Wie insbesondere aus den Fig. 4 bis 6 zu erkennen, sind Oberteil 25 und Unterteil 26 gleich ausgebildet. Diese Ausgestaltung bietet produktionstechnisch den Vorteil, daß zur Bildung eines Wägegehäuses 37 lediglich zwei gleich ausgebildete Gehäuseteile hergestellt und, nach einem Verdrehen eines Teiles um die Horizontalachse, aufeinandergesetzt werden müssen. Die produzierten Gehäuseteile sind somit sowohl als Oberteil 25 als auch als Unterteil 26 einsetzbar.

Der sich in Richtung der Längsachse u erstreckende längere Schenkel 30 ist entsprechend der Längserstreckung des Chassis 15 ausgerichtet, wobei das Maß der Länge des Schenkels 30 kleiner ist als das Maß der Längserstreckung des Chassis 15. Jedoch ist der lange Schenkel 30 so bemessen, daß die Zentren des Aufnahmebodens 18 und des Montagebodens 19 des Chassis 15 und somit die Schwerpunkte des Antriebs 8 und des Rührgefäßes 6 mit der Aufnahme 7 im Bereich der Wägeeinrichtung 16 liegen. Die Breite, d.h. die Erstreckung senkrecht zur Längsachse u, beträgt etwa ein Drittel der Länge des langen Schenkels 30.

Mittig in Längserstreckung der Wägeeinrichtung 16 besitzt diese einen einen spitzen Winkel Beta zur Längsachse u einschließenden Wägeausleger 31, wobei der Winkel Beta in dem gezeigten Ausführungsbeispiel 90° beträgt. Der Abstand von der Längsachse u bis zum freien Ende des Wägeauslegers 31 entspricht dem zwischen der Längsachse u und dem freien Ende des Chassis-Auslegers 21. Auch die Breite des Wägeauslegers 31 ist der des Auslegers 21 des Chassis 15 angepaßt, so daß bei einer Übereinanderanordnung von Wägeeinrichtung 16 und Chassis 15 nahezu eine Überdeckung von Ausleger 21 und Wägeausleger 31 erfolgt.

In dem Wägeraum 29 ist ein Wiegebalken 32 angeordnet, welcher entlang der Längsachse u ausgerichtet ist. Dieser Wiegebalken 32 ist mit nicht dargestellten Dehnungsmeßstreifen versehen.

Oberteil 25 und Unterteil 26 der Wägeeinrichtung 16 sind über den Wiegebalken 32 miteinander verbunden, wobei das Oberteil 25 an dem Unterteil 26 über nicht dargestellte Anschlagsicherungen gefangen ist. Das Unterteil 26 ist fest auf dem Gehäuseboden 17 verankert.

Die Grundrißfläche des Oberteils 25 ist vorteilhafterweise so ausgebildet, daß ein Flächen-Schwerpunkt S etwa im Schnittpunkt einer Wiegebalken-Längsachse a mit einer Wägeausleger-Längsachse b, welche senkrecht zu der Längsachse c des langen Schenkels 30 ausgerichtet ist, liegt.

Weiterhin besitzt die Wägeeinrichtung 16 eine Steckfahne 33, auf welche ein mit einem Kabelschuh 34 versehenes Kabel 35 aufgeschoben wird. Die Stromversorgung der Wägeeinrichtung 16 und die Weiterleitung der Meßdaten an eine Auswertelektronik erfolgt über einen Kabelstrang 36.

Das Chassis 15 ist derart auf der Wägeeinrichtung 16 angeordnet, daß sich die Auflagefüße 22 bis 24 an entsprechenden Auflagepunkten A1 bis A3 über nicht dargestellte Dämpfungselemente in Form von Gummipuffern abstützen, womit das Chassis 15 über diese drei, in den Endbereichen des T-Grundrisses des durch das Oberteil 25 und das Unterteil 26 gebildeten Wägegehäuses 37 angeordnete Auflagepunkte A1 bis A3 auf letzteres einwirkt. Die Auflagepunkte A1 und A2, welche von den Auflagefüßen 23 und 24 beaufschlagt werden, sind in den Endbereichen des langen Schenkels 30 mit Abstand zur Längsachse u angeordnet. An der Oberseite des freikragenden Wägeauslegers 31 ist der mit dem Auflagefuß 22 korrespondierende Auflagepunkt A3 vorgesehen.

Die Abstände der Auflagepunkte A1 bis A3 untereinander und somit auch die Längen von langem Schenkel 30 und Wägeausleger 31 sind so bemessen, daß die Auflagepunkte A1 bis A3 die Eckpunkte eines nahezu rechtwinkligen Dreiecks bilden, wobei die gedachten Verbindungslinien zwischen dem Ausleger-Auflagepunkt A3 zu den Auflagepunkten A1 und A2 einen Winkel Alpha einschließen. Dieser Winkel Alpha beträgt ca. 90° bis 94°, bevorzugt ca. 92°.

Der Wiegebalken 32 ist, wie bereits erwähnt, entlang der Längsachse u und dem entsprechend, in eingebautem Zustand, zwischen dem Rührwerk 10 und dem Antrieb 8 und entlang der größeren Achse x des Grundrisses des Rührgefäßes 6 ausgerichtet. Die Eigengewichte von Antrieb 8, Aufnahme 7, der Heizung 40 und des Rührgefäßes 6 wirken stets auf die Wägeeinrichtung 16 bzw. auf den Wiegebalken 32. Dies ist in einer elektronischen Schalteinrichtung berücksichtigt, welche so ausgelegt ist, daß das Gewicht mittels einer digitalen Anzeige 38 erst dann angezeigt wird, wenn zusätzlich zu dem eigenen Gewicht weitere Gewichte hinzugefügt werden. Wird demnach die Küchenmaschine 1 eingeschaltet, so zeigt die Digital-Anzeige 38 einen Tara-Punkt an. Wird eine Gewichtsanzeige gewünscht, so wird eine Reset-Taste 39 gedrückt, wonach in der Digital-Anzeige Null Gramm angezeigt werden. Erst nach Einfüllen von Zutaten in das Rührgefäß 6 wirkt dieses Gewicht zusätzlich auf die Wägeeinrichtung 16, welche Gewichtszunahme angezeigt wird. Hierbei besteht die Möglichkeit, Jederzeit die Digital-Anzeige 38 mittels der Reset-Taste 39 auf Null Gramm zu setzen, um ein weiteres Zuwiegen zu erleichtern. Hierbei können bis zu 2,5 kg in einem Wiegeschritt und insgesamt bis zu 7,5 kg zugewogen werden. Eine elektronische Sperrvorrichtung bewirkt hierbei, daß ein Wiegen nur bei Stillstand des Rührwerks 10 zugelassen wird.

Wie bereits erwähnt erfolgt durch die ovale, teilweise außermittige Ausgestaltung des Rührgefäßes eine Verlagerung des Schwerpunktes mit zunehmender Befüllung entlang der Achse x bzw. u. Bedingt durch die Ausrichtung des Wiegebalkens 32 entlang dieser Schwerpunktsverlagerungsrichtung ist stets eine korrekte Gewichtsmessung gegeben. Weiterhin werden durch diese Ausrichtung des Wiegebalkens 33 etwaige Verkippungskräfte sehr gering gehalten.

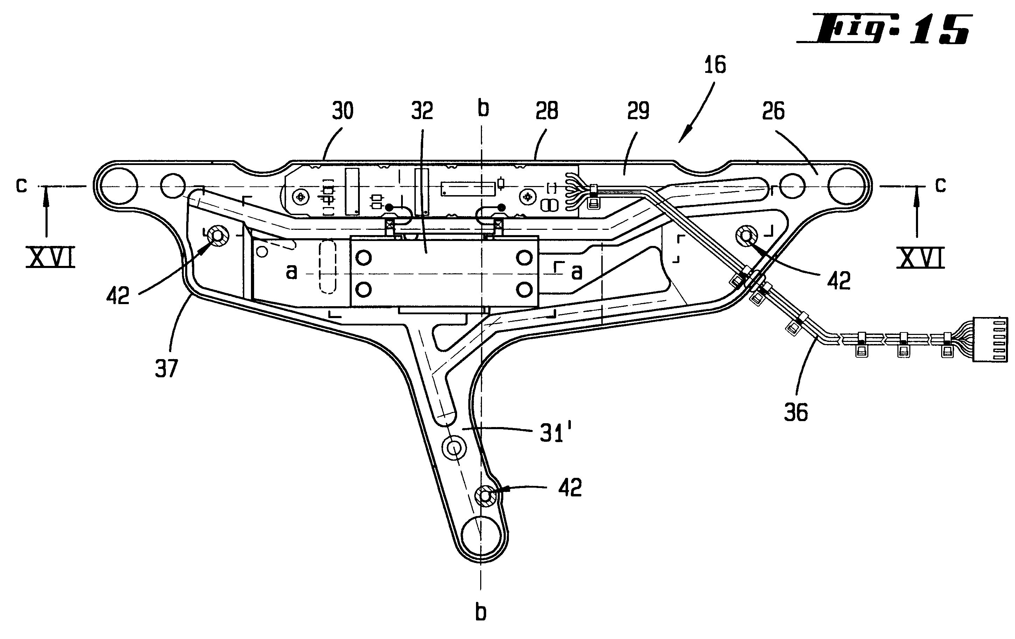

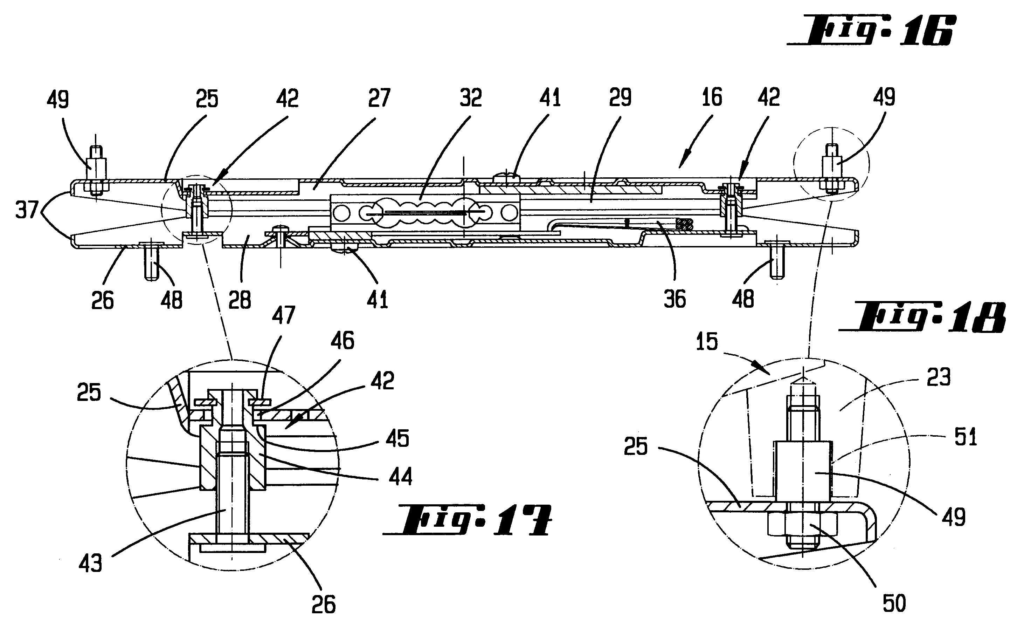

In den Fig. 14 bis 18 ist eine zweite Ausführungsform der Wägeeinrichtung 16 dargestellt. Wie insbesondere aus Fig. 14 zu erkennen, ist auch in dieser Ausführungsform ein sich parallel zu der Längsachse u erstreckender längerer Schenkel 30 vorgesehen. Letzterer ist hierbei so bemessen, daß die Zentren des Aufnahmebodens 18 und des Montagebodens 19 des strichpunktiert dargestellten Chassis 15 und somit die Schwerpunkte des Antriebs 8 und des Rührgefäßes 6 mit der Aufnahme 7 im Bereich der Wägeeinrichtung 16 liegen.

Das Wägegehäuse 37 wird ebenfalls durch ein Oberteil 25 und ein Unterteil 26 unter Bildung eines Wägeraumes 29 gebildet. Das Oberteil 25 weist einen von dem langen Schenkel 30 ausgehenden, einen spitzen Winkel Beta' von ca. 70 bis 75°, bevorzugt 73°, einschließenden kurzen Schenkel 31' auf.

Das Unterteil 26 ist -entsprechend dem ersten Ausführungsbeispiel- gleich dem Oberteil 25 ausgebildet, jedoch um eine horizontale Achse gedreht, so daß durch Übereinanderanordnung von Ober- und Unterteil das Wägegehäuse 37 gebildet ist. Dementsprechend weist auch das Unterteil 26 einen einen spitzen Winkel Beta'' zu dem langen Schenkel 30 einschließenden kurzen Schenkel 31'' auf. In Übereinanderordnung von Unter- und Oberteil bilden die beiden kurzen Schenkel 31' und 31'' einen keilförmig ausgebildeten Wägeausleger 31, wobei die freien Enden beider kurzen Schenkel 31' und 31'' in Übereinanderlage treten zur Ausbildung des Auflagepunktes A3. Eine Wägeausleger-Achse b, welche von dem Auflagepunkte A3 ausgehend sich senkrecht zur Längsachse c des langen Schenkels 30 erstreckt, bildet hierbei eine Symmetrieachse für das gesamte Wägegehäuse 37. Demnach ist diese Wägeausleger-Achse b entsprechend mittig zwischen den beiden auf dem langen Schenkel 30 angeordneten Auflagepunkten A1 und A2 ausgerichtet.

Entsprechend der ersten Ausführungsform sind die Abstände der Auflagepunkte A1 bis A3 untereinander und somit auch die Längen von langem Schenkel 30 und den kurzen Schenkeln 31' und 31'' so bemessen, daß die Auflagepunkte A1 bis A3 die Eckpunkte eines nahezu rechtwinkligen Dreiecks bilden. Auch hier beträgt der Winkel Alpha ca. 90 bis 94°, bevorzugt ca. 92°.

Weiterhin ist auch bei diesem Ausführungsbeispiel das Wägegehäuse 37 so konstruiert, daß ein Flächen-Schwerpunkt S des Oberteils 25 etwa im Schnittpunkt der Wiegebalken-Längsachse a mit der Wägeausleger-Achse b liegt (vergl. Fig. 14).

Unterteil 26 und Oberteil 25 sind lediglich im Bereich des Wiegebalkens 32 miteinander verbunden, indem das Oberteil 25 im Bereich eines Endes, in Richtung der Längsachse a betrachtet, des Wiegebalkens 32 mittels Schrauben 41 befestigt ist. Eine entsprechende Befestigung des Unterteiles 26 erfolgt in dem diesem Ende gegenüberliegenden Endbereich des Wiegebalkens 32, an dessen Unterseite.

Der Wiegebalken 32 ist mit einem kapazitiven Meßaufnehmer versehen. Hierbei ändert sich entsprechend einer Gewichtsveränderung der Abstand zweier Kondensator-Platten.

Die Stromversorgung und Weiterleitung der Meßdaten erfolgt, wie in dem zuvor beschriebenen Ausführungsbeispiel, über einen Kabelstrang 36.

Nahe der Auflagepunkte A1 bis A3 sind in beide senkrechten Richtungen wirksame Anschlagsicherungen 42 vorgesehen. Hierzu ist jeweils ein in den Wägeraum 29 hineinragender Gewindestift 43 fest an dem Unterteil 26 angeordnet. Auf diesem Gewindestift 43 ist eine Distanzmutter 44 aufgeschraubt, deren nach oben, d. h. in Richtung auf das Oberteil 25, weisender Bereich querschnittsverjüngt ist. Im Bereich des Überganges zu dem querschnittsverjüngten Bereich ist ein Anschlagkragen 45 ausgebildet. Der querschnittsreduzierte Bereich der Distanzmutter 44 durchtritt das Oberteil 25 im Bereich entsprechend angeordneter Bohrungen 46. Eine obere Anschlagsicherung ist durch einen Sicherungsring 47 gebildet. Das Oberteil 25 ist demnach zwischen dem Sicherungsring 47 und dem Anschlagkragen 45 gefangen, wobei ein Spiel gegeben ist, welches Maß etwa dem doppelten der Wandungsdicke des Oberteiles 25 in diesem Bereich entspricht. Diese Anschlagsicherungen 42 dienen einerseits als Führungselemente für das Oberteil 25 und andererseits schützen diese Anschlagsicherungen 42 den Wiegebalken 32 vor unzulässiger Verformung. Die Anschlagsicherungen 42 wirken, wie bereits erwähnt, sowohl in Zug- als auch in Druckrichtung.

Das Unterteil 26 wird mittels an diesem angeordneten, jeweils mit einem Gewinde versehenen Stiften 48 an dem Gehäuseboden 17 befestigt, wozu unterseitig entsprechende Muttern auf diese Stifte 48 aufgedreht werden.

Entsprechend dem ersten Ausführungsbeispiel ist das Chassis 15 derart auf der Wägeeinrichtung 16 angeordnet, daß sich die Auflagefüße 22 bis 24 an den entsprechenden Auflagepunkten A1 bis A3 abstützen, wobei diese Abstützung nicht direkt, sondern vielmehr über Dämpfungselemente 49 erfolgt, welche bspw. in Form von Gummipuffern ausgebildet sein können. Diese Dämpfungselemente 49 werden im Bereich der Auflagepunkte A1 bis A3 mittels Schrauben 50 befestigt. Die Auflagefüße 22 bis 24 des Chassis 15 weisen entsprechende Ausnehmungen 51 auf, in welche die Dämpfungselemente 49 eintreten.

Die Funktionsweise, insbesondere die Anzeige der zu ermittelnden Gewichte, entspricht dem der ersten Ausführungsform.

## Patentansprüche

1. Küchenmaschine (1) mit einem Rührgefäß (6) und einem Antrieb (8) für ein Rührwerk (10) in dem Rührgefäß (6), wobei das Rührgefäß (6) in seinem unteren Bereich mittels einer Heizung (40) aufheizbar ist, dadurch gekennzeichnet, daß eine Wägeeinrichtung (16) vorgesehen ist und daß die Wägeeinrichtung (16) das Gewicht einer Rührtopfaufnahme (7), einschließlich der Heizung (40), aufnimmt.

2. Küchenmaschine nach Anspruch 1, dadurch gekennzeichnet, daß die Wägeeinrichtung (16) die zu wägenden Teile über eine Dreipunkt-Auflage abstützt.

3. Küchenmaschine nach einem oder mehreren der vorhergehenden Ansprüche, dadurch gekennzeichnet, daß die Auflagepunkte (A1, A2, A3) jeweils Endbereichen der Wägeeinrichtung (16) zugeordnet sind.

4. Küchenmaschine nach einem oder mehreren der vorhergehenden Ansprüche, dadurch gekennzeichnet, daß die Auflagepunkte (A1 bis A3) jeweils mit einem Dämpfungselement (49) ausgestattet sind.

5. Küchenmaschine nach einem oder mehreren der vorhergehenden Ansprüche, dadurch gekennzeichnet, daß die Wägeeinrichtung (16) das Gewicht des Antriebs (8) aufnimmt.

6. Küchenmaschine nach einem oder mehreren der vorhergehenden Ansprüche, dadurch gekennzeichnet, daß ein Wiegebalken (32) vorgesehen ist und das der Wiegebalken (32) entlang einer axialen Verlängerung zwischen dem Rührwerk (10) und dem Antrieb (8) ausgerichtet ist.

7. Küchenmaschine nach einem oder mehreren der vorhergehenden Ansprüche, dadurch gekennzeichnet, daß das Rührgefäß (6) einen ovalartigen Grundriß aufweist und daß der Wiegebalken (32) entlang der größeren Achse (x) des Grundrisses ausgerichtet ist.

8. Küchenmaschine nach einem oder mehreren der vorhergehenden Ansprüche, dadurch gekennzeichnet, daß der Wiegebalken (32) in einem, eine horizontale Teilung aufweisenden Wägegehäuse (37) aufgenommen ist.

9. Küchenmaschine nach einem oder mehreren der vorhergehenden Ansprüche, dadurch gekennzeichnet, daß ein Oberteil (25) des Wägegehäuses (37) an einem Unterteil (26) über eine in beiden Richtungen wirksame Anschlagsicherung (42) gefangen ist.

10. Küchenmaschine nach einem oder mehreren der vorhergehenden Ansprüche, dadurch gekennzeichnet, daß das Wägegehäuse (37) einen T-förmigen Grundriß aufweist.

11. Küchenmaschine nach einem oder mehreren der vorhergehenden Ansprüche, dadurch gekennzeichnet, daß die beiden T-Balken (30, 31) des Wägegehäuses (37) in einem spitzen Winkel (Beta) zueinander verlaufen.

12. Küchenmaschine nach einem oder mehreren der vorhergehenden Ansprüche, dadurch gekennzeichnet, daß ein Schenkel (31) des T-förmigen Wägegehäuses (37) keilförmig ausgebildet ist.

13. Küchenmaschine nach einem oder mehreren der vorhergehenden Ansprüche, dadurch gekennzeichnet, daß die Keilform des einen Schenkels (31) durch die Projektion zweier für sich stielförmig abgewinkelter Schenkel (31', 31'') des Unterteiles (26) und des Oberteiles (25) gebildet ist.

14. Küchenmaschine nach einem oder mehreren der vorhergehenden Ansprüche, dadurch gekennzeichnet, daß das Oberteil (25) und das Unterteil (26) zumindest hinsichtlich ihrer Außenkonturen formgleich ausgebildet sind.

15. Küchenmaschine nach einem oder mehreren der vorhergehenden Ansprüche, dadurch gekennzeichnet, daß die Rührtopfaufnahme (7) und der Antrieb (8) insgesamt auf einem Chassis (15) angeordnet sind und daß das Chassis (15) auf das Wägegehäuse (37) einwirkt.

16. Küchenmaschine nach einem oder mehreren der vorhergehenden Ansprüche, dadurch gekennzeichnet, daß das Chassis (15) über drei, in Endbereichen des T-Grundrisses des Wägegehäuses (37) angeordnete Auflagepunkte (A1 bis A3) auf das Wägegehäuse (37) einwirkt.

## Claims

1. Kitchen machine (1) with a stirrer vessel (6) and a drive (8) for an agitator (10) in the stirrer vessel (6), wherein the stirrer vessel (6) in its lower region can be heated up by means of a heating device (40), characterised in that a weighing device (16) is provided, and in that the weighing device (16) holds the weight of a stirrer pot receptacle (7), including the heating device (40).

2. Kitchen machine according to claim 1, characterised in that the weighing device (16) supports the parts to be weighed via a three-point bearing system.

3. Kitchen machine according to one or more of the preceding claims, characterised in that the bearing points (A1, A2, A3) are each assigned to end regions of the weighing device (16).

4. Kitchen machine according to one or more of the preceding claims, characterised in that the bearing points (A1 to A3) are each equipped with a damping element (49).

5. Kitchen machine according to one or more of the preceding claims, characterised in that the weighing device (16) holds the weight of the drive (8).

6. Kitchen machine according to one or more of the preceding claims, characterised in that a movable beam (32) is provided and in that the movable beam (32) is oriented along an axial extension between the agitator (10) and the drive (8).

7. Kitchen machine according to one or more of the preceding claims, characterised in that the stirrer vessel (6) has an oval-like contour and in that the movable beam (32) is oriented along the major axis (x) of the contour.

8. Kitchen machine according to one or more of the preceding claims, characterised in that the movable beam (32) is held in a weighing housing (37) comprising a horizontal division.

9. Kitchen machine according to one or more of the preceding claims, characterised in that an upper portion (25) of the weighing housing (37) is secured to a lower portion (26) via a stop locking device (42) acting in both directions.

10. Kitchen machine according to one or more of the preceding claims, characterised in that the weighing housing (37) has a T-shaped contour.

11. Kitchen machine according to one or more of the preceding claims, characterised in that the two T-beams (30, 31) of the weighing housing (37) extend at an acute angle (β) to each other.

12. Kitchen machine according to one or more of the preceding claims, characterised in that one arm (31) of the T-shaped weighing housing (37) is wedge-shaped.

13. Kitchen machine according to one or more of the preceding claims, characterised in that the wedge shape of the one arm (31) is formed by the projection of two arms (31', 31'') of the lower portion (26) and upper portion (25) angled in a butt shape independently.

14. Kitchen machine according to one or more of the preceding claims, characterised in that the upper portion (25) and the lower portion (26) are designed with the same shape at least with respect to their outer contours.

15. Kitchen machine according to one or more of the preceding claims, characterised in that the stirrer pot receptacle (7) and the drive (8) are arranged as a whole on a chassis (15) and in that the chassis (15) acts on the weighing housing (37).

16. Kitchen machine according to one or more of the preceding claims, characterised in that the chassis (15) acts on the weighing housing (37) via three bearing points (A1 to A3) arranged in end regions of the T-contour of the weighing housing (37).

## Revendications

1. Robot ménager (1) comportant un récipient d'agitation (6) et un entraînement (8) destiné à un agitateur (10) monté dans le récipient d'agitation (6), le récipient d'agitation (6) étant susceptible d'être chauffé au moyen d'un chauffage (40) monté dans sa zone inférieure. caractérisé en ce qu'est prévu un dispositif de pesage (16) et en ce que le dispositif de pesage (16) supporte le poids d'un organe de réception de pot d'agitation (7), y compris du chauffage (40).

2. Robot ménager selon la revendication 1, caractérisé en ce que le dispositif de pesage (16) soutient les parties à peser par l'intermédiaire de trois points d'appui.

3. Robot ménager selon l'une ou plusieurs des revendications précédentes, caractérisé en ce que les points d'appui (A1, A2, A3) sont chacun associés à des zones d'extrémités du dispositif de pesage (16).

4. Robot ménager selon l'une ou plusieurs des revendications précédentes, caractérisé en ce que les points d'appui (A1 à A3) sont chacun équipés d'un élément d'amortissement (49).

5. Robot ménager selon l'une ou plusieurs des revendications précédentes, caractérisé en ce que le dispositif de pesage (16) supporte le poids de l'entraînement (8).

6. Robot ménager selon l'une ou plusieurs des revendications précédentes, caractérisé en ce qu'est prévue une traverse mobile (32) et en ce que la traverse mobile (32) est orientée le long d'un prolongement axial entre l'agitateur (10) et l'entraînement (8).

7. Robot ménager selon l'une ou plusieurs des revendications précédentes, caractérisé en ce que le récipient d'agitation (6) a un contour du genre ovale et en ce que la traverse mobile (32) est orientée selon le grand axe (x) du contour.

8. Robot ménager selon l'une ou plusieurs des revendications précédentes, caractérisé en ce que la traverse mobile (32) est supportée dans un boîtier de pesage (37) présentant une graduation horizontale.

9. Robot ménager selon ou plusieurs des revendications précédentes. caractérisé en ce qu'une partie supérieure (25) du boîtier de passage (37) est rendue prisonnière d'une partie inférieure (26) par l'intermédiaire d'une fixation sécurité à butées (42) agissant dans les deux directions.

10. Robot ménager selon l'une ou plusieurs des revendications précédentes caractérisé en ce que le boîtier de pesage (37) présente un contour en forme de T.

11. Robot ménager selon l'une ou plusieurs des revendication précédentes caractérisé en ce que les deux poutres en T (30, 31) du boîtier de pesage (37) formant entre elles un angle aigu (Bêta).

12. Robot ménager selon l'une ou plusieurs des revendications précédentes, caractérisé en ce qu'une branche (31) du boîtier de pesage (37) en forme de T est réalisée en forme de coin.

13. Robot ménager selon l'une ou plusieurs des revendications précédentes, caractérisé en ce que la forme en coin d'une branche (31) est constituée par la projection de deux branches (31',31'') coudées en forme de tige, de la partie inférieure (26) et de la partie supérieure (25).

14. Robot ménager selon l'une ou plusieurs des revendications précédentes, caractérisé en ce que la partie supérieure (25) et la partie inférieure (26) sont réalisées avec une forme identique au moins concernant leurs contours extérieurs.

15. Robot ménager selon l'une ou plusieurs des revendications précédentes caractérisé en ce que l'organe de réception de pot d'agitation (7) et l'entraînement (8) sont disposés ensemble sur un châssis (15) et en ce que le châssis (15) agit sur le boîtier de pesage (37).

16. Robot ménager selon l'une ou plusieurs des revendications précédentes, caractérisé en ce que le châssis (15) agit sur le boîtier de pesage (37) par l'intermédiaire de trois points d'appui (A1 à A3) disposés dans des zones d'extrémité du contour en T du boîtier de pesage (37).
